# DEMANDE DE BREVET EUROPEEN

(11) **EP 1 265 390 A1**
(43) Date de publication de la demande: **11.12.2002**
(21) Numéro de dépôt: 02077101.0
(22) Date de dépôt: 28.05.2002
(51) Int. Cl.: H04L 1/18, H04L 12/56, H04L 12/28

(54) **Retransmission sélective de paquets avec controle temporel a l'emission**

(30) Priorité: 06.06.2001 FR 0107388
(71) Demandeur: Koninklijke Philips Electronics N.V., 5621 BA Eindhoven (NL)
(72) Inventeur: Reme, Jean-Marc, Société Civile S.P.I.D., 75008 Paris (FR); Delmas, Gilles, Société Civile S.P.I.D., 75008 Paris (FR)
(74) Mandataire: de la Fouchardière, Marie-Noelle

(57) **Abrégé**

L'invention propose un mécanisme de retransmission de paquet qui comporte une étape pour vérifier au niveau de l'émetteur si le paquet retransmis sera reçu à temps par le récepteur pour être traité.

Pour cela, le récepteur envoie dans sa requête en retransmission l'indication d'instant de traitement du paquet en cours de traitement au niveau de récepteur au moment où la requête est transmise. Au niveau de l'émetteur, cette indication d'instant de traitement est comparée avec l'indication d'instant de traitement du paquet à retransmettre pour autoriser ou bloquer sa retransmission.

## Description

### Domaine de l'invention

L'invention concerne un système de transmission comportant au moins un émetteur et un récepteur, ledit émetteur comportant des moyens de transmission de paquets qui contiennent notamment une indication d'instant de traitement de paquet, et des moyens de réception de requêtes en retransmission relatives à un paquet à retransmettre, et ledit récepteur comportant des moyens de réception de paquets, des moyens de traitement des paquets reçus, et des moyens de transmission de requêtes en retransmission relatives à un paquet à retransmettre.

L'invention concerne aussi un terminal comportant des moyens de réception de paquets contenant notamment une indication d'instant de traitement de paquet, des moyens de traitement des paquets reçus, et des moyens de transmission de requêtes en retransmission relatives à un paquet.

L'invention concerne aussi un serveur comportant des moyens de transmission de paquets contenant notamment une indication d'instant de traitement de paquet, et des moyens de réception d'une requête en retransmission, relative à un paquet à retransmettre, émise par un terminal doté de moyens de réception de paquets et de moyens de traitement des paquets reçus.

L'invention concerne également un procédé de retransmission destiné à être mis en oeuvre dans un tel système de transmission, ainsi qu'un programme comportant des instructions de code de programme pour la mise en oeuvre d'un tel procédé de retransmission lorsqu'il est exécuté par un processeur.

L'invention s'applique d'une façon générale à toute transmission par paquets au travers d'un réseau peu fiable. Elle s'applique en particulier à la transmission de données vidéo via le réseau Internet vers des terminaux de communication radio mobile.

### Arrière plan technologique de l'invention

Le document « RTP Payload Format to Enable Mulitple Selective Retransmissions » de Akihiro Miyazaki, Hideaki Fukushima, Koichi Hata, Thomas Wiebke, Rolf Hakenberg, Carsten Burmeister, Norihito Takatori et Seiji Okumura, portant la référence « draft-ietf-avt-rtp-selret-00.txt » et publié le 14 novembre 2000 par l'IETF décrit un système de transmission de paquets entre un serveur et un terminal mobile et propose un mécanisme de retransmission sélective de paquets. Ce mécanisme consiste notamment à tenir compte, au niveau du terminal, du délai de transmission sur le réseau, pour décider de transmettre ou non une requête en retransmission relative à un paquet. Ce mécanisme permet d'éviter que le terminal mobile transmette une requête en retransmission lorsqu'il apparaît que le paquet retransmis ne pourra pas être reçu suffisamment tôt par le terminal pour être utilisé.

Ce mécanisme permet de limiter le nombre de requêtes en retransmission qui transitent sur le réseau, et donc d'économiser de la bande passante.

L'invention a notamment pour but de proposer un mécanisme de retransmission sélective complémentaire de celui qui est décrit dans ce document.

### Résumé de l'invention

Pour cela, un système de transmission selon l'invention et tel que décrit dans le paragraphe introductif est caractérisé en ce qu'au moins certaines desdites requêtes en retransmission contiennent une information de récupération permettant de récupérer l'indication d'instant de traitement du paquet en cours de traitement au moment où la requête en retransmission est transmise, et ledit émetteur comporte des moyens de récupération d'une indication d'instant de traitement à partir d'une information de récupération contenue dans une requête en retransmission reçue, et des moyens de comparaison de l'indication d'instant de traitement récupérée et de l'indication d'instant de traitement du paquet à retransmettre, pour autoriser ou pour bloquer la retransmission du paquet à retransmettre.

Ainsi, l'invention consiste à proposer un mécanisme de contrôle au niveau de l'émetteur pour éviter de retransmettre un paquet s'il apparaît que le paquet retransmis ne sera pas reçu à temps par le récepteur pour être traité.

Un tel mécanisme complète utilement le mécanisme proposé dans l'art antérieur précité. En effet, lorsque le mécanisme selon l'art antérieur est utilisé, le récepteur émet une requête en retransmission relative à un paquet lorsqu'il estime, en tenant compte des délais normaux de transmission sur le réseau, que le paquet retransmis pourra être reçu à temps pour être traité. Mais il se peut que la congestion du réseau de transmission soit telle que la requête en retransmission arrive tardivement à l'émetteur. Grâce à l'invention, le paquet à retransmettre n'est pas retransmis par l'émetteur lorsque la requête en retransmission lui arrive si tard qu'il n'est plus possible que le paquet retransmis soit reçu à temps par le récepteur.

Dans un premier mode de réalisation de l'invention, ladite information de récupération est constituée par l'indication d'instant de traitement du paquet en cours de traitement au moment où la requête en retransmission est transmise. Ce mode de réalisation est avantageusement utilisé lorsque l'indication d'instant de traitement contenu dans un paquet est propre à ce paquet, c'est-à-dire lorsque deux paquets différents ne peuvent pas contenir la même indication d'instant de traitement.

Dans un second mode de réalisation de l'invention, lesdits paquets contiennent un numéro de séquence, ladite information de récupération est constituée par le numéro de séquence du paquet en cours de traitement au moment où la requête en retransmission est transmise, et ledit émetteur comporte des moyens de comparaison du numéro de séquence contenu dans une requête en retransmission et du numéro de séquence du paquet à retransmettre lorsque l'indication d'instant de traitement récupérée et l'indication d'instant de traitement du paquet à retransmettre sont identiques, pour autoriser ou pour bloquer la retransmission du paquet à retransmettre.

Ce mode de réalisation est avantageusement utilisé lorsque plusieurs paquets peuvent contenir une même indication d'instant de traitement. Lorsque le paquet qui était en cours de traitement au moment où la requête en retransmission a été émise et le paquet à retransmettre ont la même indication d'instant de traitement, la comparaison de leur numéro de séquence permet de déterminer s'il est ou non utile de retransmettre le paquet à retransmettre.

Un autre but de l'invention est de limiter le nombre d'informations qui doivent être stockées au niveau de l'émetteur pour permettre d'éventuelles retransmission de paquets.

Pour cela, dans un mode de réalisation avantageux de l'invention, les paquets contiennent un numéro de séquence, ledit émetteur comporte une mémoire de stockage d'informations relatives à au moins certains paquets, notamment les numéros de séquence desdits paquets, et des moyens pour effacer de ladite mémoire les informations relatives à au moins certains des paquets qui ont un numéro de séquence inférieur ou égal à celui d'un paquet à retransmettre, lorsque la retransmission dudit paquet à retransmettre est bloquée.

### Brève description des dessins

L'invention sera mieux comprise et d'autres détails apparaîtront dans la description qui va suivre en regard des dessins annexés qui sont donnés à titre d'exemples non limitatifs et dans lesquels :
- la figure 1 est un schéma fonctionnel d'un exemple de système de transmission selon l'invention,
- la figure 2 est un diagramme décrivant les étapes d'un premier mode de réalisation d'un procédé de retransmission selon l'invention,
- la figure 3 est un diagramme décrivant les étapes d'un second mode de réalisation d'un procédé de retransmission selon l'invention.

### Description de modes de réalisation de l'invention

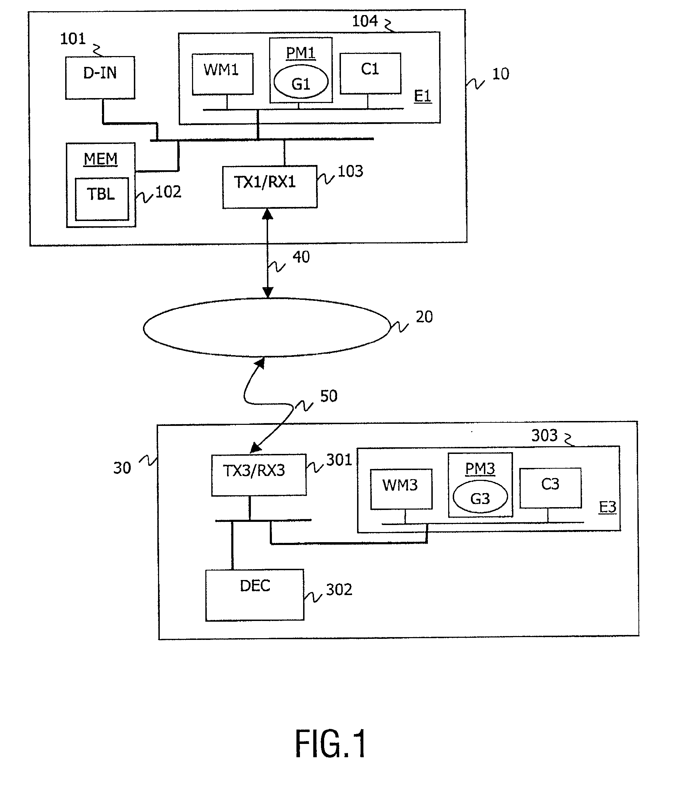

Sur la figure 1 on a représenté un exemple de système de transmission selon l'invention comportant un serveur 10 qui joue le rôle d'émetteur au sens de l'invention, un réseau de transmission 20, et un terminal 30 qui joue le rôle de récepteur au sens de l'invention.

Le réseau de transmission 20 est par exemple constitué par un réseau cellulaire, par exemple un réseau GPRS ou un réseau UMTS. Le serveur 10 est relié au réseau de transmission 20 par une liaison 40, par exemple une liaison faisant appel à un réseau de type paquet comme le réseau Internet. Le terminal 30 est relié au réseau cellulaire par une liaison radio 50.

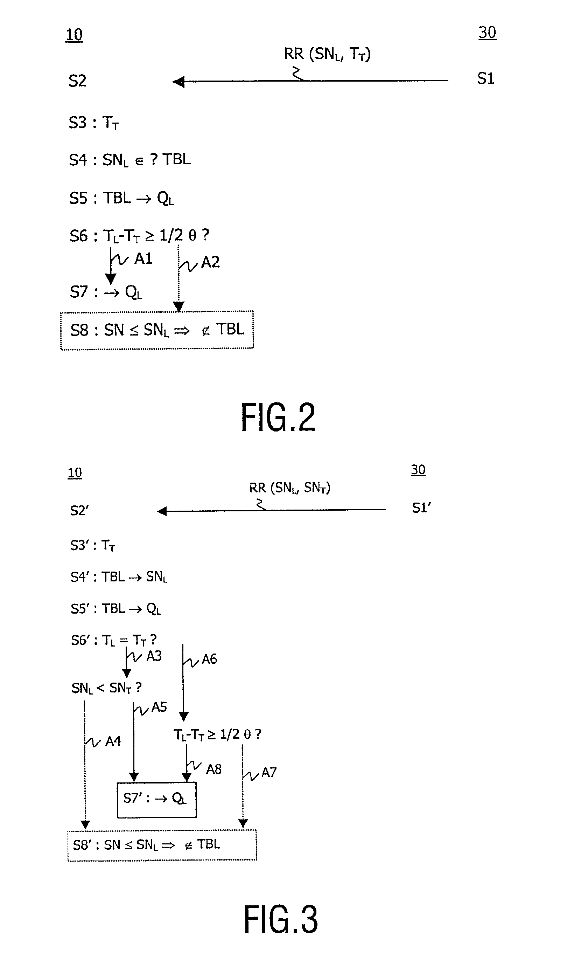

Le serveur 10 comporte une source de données D-IN représentée par un bloc 101, une mémoire de stockage de données MEM représentée par un bloc 102, un dispositif de transmission / réception TX1/RX1 représenté par un bloc 103, et un ensemble à microprocesseur E1 représenté par un bloc 104 et comportant une mémoire de travail WM1, une mémoire de programmes PM1 et un processeur C1. Le terminal 30 comporte un dispositif de transmission / réception TX3/RX3 représenté par un bloc 301, un dispositif de traitement DEC représenté par un bloc 302, un ensemble à microprocesseur E3 représenté par un bloc 303 et comportant une mémoire de travail WM3, une mémoire de programmes PM3 et un processeur C3. Les mémoires de programme PM1 et PM3 contiennent respectivement un programme ou non ensemble de programmes G1 et G3 contenant des instructions de code de programme pour la mise en oeuvre d'une procédé de retransmission selon l'invention tel qu'il va être décrit en regard des figures 2 et 3.

D'une façon générale, l'invention s'applique lorsque les paquets transmis par le serveur contiennent une indication d'instant de traitement qui est destinée à être utilisée par le terminal pour traiter les paquets reçus. Une indication d'instant de traitement est une indication à partir de laquelle on peut récupérer l'instant auquel le paquet doit être traité par le récepteur. De façon avantageuse, lorsque l'émetteur et le récepteur n'ont pas de référence de temps commune, l'indication d'instant de traitement transmise dans le paquet est une durée. Et le récepteur récupère l'instant de traitement à partir de cette durée et d'une référence de temps qui lui est propre.

A titre d'exemple, les données délivrées par la source de données D-IN sont des données codées au format MPEG-4. Dans ce cas, le dispositif de traitement DEC est un décodeur de type MPEG-4. Et l'indication d'instant de traitement est constituée par l'indication d'instant de décodage DTS qui est définie au paragraphe 7.3.4 de la norme MPEG-4 (document ISO/IEC 14496-1).

La transmission entre le serveur 10 le terminal 30 se fait avantageusement en utilisant un protocole de transport du type RTP. Le protocole de transport RTP est décrit dans le document RFC1889 publié par l'IETF. En particulier :
- Les paquets de type RTP contiennent un champ intitulé « Timestamp ». Avantageusement on utilise ce champ « Timestamp » pour transmettre l'indication d'instant de traitement du paquet.
- Les paquets RTP contiennent aussi un champ appelé « Sequence Number » auquel on fera référence dans la suite de la description. Le numéro de séquence SN contenu dans ce champ est incrémenté d'une unité à chaque fois qu'un paquet RTP est transmis. Il est destiné à être utilisé par le récepteur pour détecter la perte d'un ou plusieurs paquets dans une séquence de paquets.
- Les paquets RTP contiennent aussi un champ « Payload » qui contient les données utiles, par exemple les données codées au format MPEG-4.

Comme cela est souligné dans l'art antérieur précité, les paquets transmis n'ont pas nécessairement tous la même importance pour le récepteur. Pour éviter de surcharger le réseau il est avantageux de limiter la possibilité de retransmission aux paquets les plus importants. Dans la suite de la description ces paquets sont appelés paquets re-transmissibles. Afin de permettre les retransmissions de paquets, certaines informations relatives aux paquets re-transmissibles doivent être stockées au niveau du serveur 10. Ces informations sont par exemple stockées dans une table TBL qui est enregistrée dans la mémoire de données MEM.

Sur la figure 2, on a représenté un diagramme décrivant les étapes d'un premier mode de réalisation d'un procédé de retransmission selon l'invention. Ce mode de réalisation est avantageusement utilisé lorsque l'indication d'instant de traitement contenue dans un paquet est propre à ce paquet, c'est-à-dire lorsque deux paquets différents ne peuvent pas contenir une même indication d'instant de traitement. Lorsque les données transmises sont des données codées au format MPEG-4, cette condition est remplie si les images sont suffisamment petites pour être transportées dans un seul paquet RTP.

Dans ce premier mode de réalisation, le serveur stocke dans la table TBL pour chaque paquet re-transmissible, le numéro de séquence SN, l'indication d'instant de traitement T, et les données utiles contenues dans le champ «Payload ».

Le procédé de retransmission représenté à la figure 2 comporte :
- Une étape Si de transmission par le terminal 30 d'une requête en retransmission RR relative à un paquet Q_{L} qui a été perdu. Cette requête RR contient l'indication d'instant de traitement T_{T} du paquet Q_{T} qui est en cours de traitement au niveau du terminal 30 lorsque le terminal 30 transmet la requête en retransmission RR. La requête contient également le numéro de séquence SN_{L} du paquet Q_{L} à retransmettre. Une telle requête est par exemple transmise dans un paquet RTCP tel que décrit au paragraphe 6 de la RFC1889. Dans ce cas l'indication d'instant de traitement T_{T} et le numéro de séquence SN_{L} du paquet Q_{L} à retransmettre sont transmis dans le champ « profile-specific extensions » du paquet RTCP.
- Une étape S2 de réception de la requête en retransmission RR par le serveur 10.
- Une étape S3 de récupération de l'indication d'instant de traitement T_{T} contenue dans la requête en retransmission reçue.
- Une étape S4 de recherche du numéro de séquence SN_{L} du paquet Q_{L} à retransmettre dans la table TBL. Si le numéro de séquence SN_{L} ne figure pas dans la table TBL, cela signifie que le paquet à retransmettre n'est pas re-transmissible.
- Une étape S5 de récupération dans la table TBL de l'indication de temps de traitement T_{L} du paquet Q_{L} à retransmettre.
- Une étape S6 de comparaison des indications d'instant de traitement T_{T} et T_{L}, le résultat de ladite comparaison étant utilisé pour autoriser ou bloquer la retransmission du paquet Q_{L} à retransmettre. A titre d'exemple cette étape S6 consiste à vérifier si l'écart δ entre les indications d'instant de traitement T_{T} et T_{L} est supérieur à la moitié d'une estimation θ du délai de transmission aller-retour sur le réseau de transmission. Si T_{L}-T_{T} ≥1/2 θ, (flèche A1), la retransmission a lieu à l'étape S7. Si T_{L}-T_{T} <1/2 θ (flèche A2), la retransmission est bloquée.

Sur la figure 3, on a représenté un diagramme décrivant les étapes d'un second mode de réalisation d'un procédé de retransmission selon l'invention. Ce mode de réalisation est avantageusement utilisé lorsque plusieurs paquets peuvent contenir la même indication de temps de traitement. Dans ce cas, il est possible que le paquet à retransmettre et le paquet en cours de traitement lorsque la requête en retransmission est transmise contiennent la même indication d'instant de traitement. Les numéros de séquence des deux paquets sont alors avantageusement comparés pour déterminer si le récepteur a encore besoin du paquet à retransmettre. Dans ce second mode de réalisation, le serveur 10 doit stocker dans la table TBL le numéro de séquence SN, l'indication d'instant de traitement T et les données utiles contenues dans le champ «Payload » pour tous les paquets transmis.

Le procédé de retransmission représenté sur la figure 3 comporte
- Une étape S1' de transmission par le terminal 30 d'une requête en retransmission RR relative à un paquet Q_{L} qui a été perdu. Cette requête RR contient le numéro de séquence SN_{T} du paquet Q_{T} qui est en cours de traitement au niveau du terminal 30 lorsque le terminal 30 transmet la requête en retransmission RR. Ce numéro de séquence SN_{T} constitue une information de récupération de l'indication d'instant de traitement T_{T} dudit paquet. La requête en retransmission RR contient également le numéro de séquence SN_{L} du paquet à retransmettre. Lorsque la requête en retransmission RR est transmise dans un paquet RTCP, les numéros de séquence SN_{T} et SN_{L} sont respectivement transmis dans le champ « profile-specific extensions » du paquet RTCP.
- Une étape S2' de réception de la requête en retransmission RR par le serveur 10.
- Une étape S3' de récupération dans la table TBL de l'indication d'instant de traitement T_{T} du paquet Q_{T} en cours de traitement au moment où la requête en retransmission RR a été transmise, à partir de l'information de récupération SN_{T} contenue dans la requête en retransmission reçue.
- Une étape S4' de recherche du numéro de séquence SN_{L} du paquet à retransmettre dans la table TBL.
- Une étape S5' de récupération dans la table TBL de l'indication de temps de traitement T_{L} du paquet Q_{L} à retransmettre.
- Une étape S6' de comparaison des indications d'instant de traitement T_{T} et T_{L}. Cette étape consiste à :
   vérifier si T_{L}=T_{T}
   si T_{L}=T_{T} (flèche A3), les numéros de séquence SN_{L} et SN_{T} sont comparés.
   si SN_{L}<SN_{T} (flèche A4), la retransmission est bloquée.
   si SN_{L}>SN_{T} (flèche A5), la transmission est effectuée à l'étape S7'.
   si T_{L}≠T_{T} (flèche A6), vérifier si T_{L}-T_{T} ≥ 1/2θ
   si T_{L}-T_{T}<1/2θ (flèche A7), la retransmission est bloquée.
   si T_{L}-T_{T} ≥ 1/2θ (flèche A8), la retransmission est effectuée à l'étape S7'.

Avantageusement le procédé selon l'invention compte une étape supplémentaire représentée en pointillés sur les figures 2 et 3, et référencée S8 et S8' respectivement. Cette étape supplémentaire consiste à effacer de la table TBL les informations qui ne sont plus utiles. Comme indiqué sur les figures 2 et 3, lorsque la retransmission d'un paquet Q_{L} à retransmettre est bloquée (flèches A2, A4 et A7), les informations relatives aux paquets qui ont un numéro de séquence SN inférieur ou égal au numéro de séquence SN_{L} du paquet Q_{L} à retransmettre sont effacées de la table TBL. Ce mode de réalisation permet d'éviter que la table TBL ne grossisse exagérément.

On peut utiliser des seuils de décision différents de ceux qui viennent d'être décrits. Par exemple, à l'étape S6', on peut imposer un écart minimum entre les numéros de séquence SN_{L} et SN_{T} pour autoriser la retransmission du paquet Q_{L}.

L'invention n'est pas limitée à la transmission de données codées au format MPEG-4, ni à l'utilisation du protocole RTP. Elle s'applique d'une façon générale à toute transmission de données dans laquelle se posent des problèmes de temps réel et de séquencement, dès lors qu'une indication d'instant de traitement des données est transmise avec les données.

## Revendications

1. Système de transmission comportant au moins un émetteur (10) et un récepteur (20),
- ledit émetteur comportant des moyens de transmission de paquets (TX1) qui contiennent notamment une indication d'instant de traitement de paquet (T_{T}, T_{L}), et des moyens de réception (RX1) de requêtes en retransmission (RR) relatives à un paquet à retransmettre (Q_{L}),
- ledit récepteur comportant des moyens de réception (RX3) de paquets, des moyens de traitement des paquets reçus (DEC), et des moyens de transmission (TX3) de requêtes en retransmission relatives à un paquet à retransmettre,
**caractérisé en ce que** :
- au moins certaines desdites requêtes en retransmission contiennent une information de récupération (SN_{T}; T_{T}) permettant de récupérer l'indication d'instant de traitement (T_{T}) du paquet (Q_{T}) en cours de traitement au moment où la requête (RR) en retransmission est transmise,
- et ledit émetteur comporte des moyens (E1) de récupération d'une indication d'instant de traitement (T_{T}) à partir d'une information de récupération (SN_{T} ; T_{T}) contenue dans une requête en retransmission reçue, et des moyens (E1) de comparaison de l'indication d'instant de traitement récupérée et de l'indication d'instant de traitement du paquet à retransmettre, pour autoriser ou pour bloquer la retransmission du paquet à retransmettre.

2. Système de transmission selon la revendication 1, **caractérisé en ce que** lesdits paquets contiennent un numéro de séquence (SN), ledit émetteur comporte une mémoire (TBL) de stockage d'informations relatives à au moins certains paquets, notamment les numéros de séquence desdits paquets, et des moyens pour effacer de ladite mémoire les informations relatives à au moins certains des paquets qui ont un numéro de séquence inférieur ou égal à celui d'un paquet à retransmettre, lorsque la retransmission dudit paquet à retransmettre est bloquée.

3. Système de transmission selon la revendication 1, **caractérisé en ce que** ladite information de récupération est constituée par l'indication d'instant de traitement du paquet en cours de traitement au moment où la requête en retransmission est transmise.

4. Système de transmission selon la revendication 1, **caractérisé en ce que** lesdits paquets contiennent un numéro de séquence, ladite information de récupération est constituée par le numéro de séquence du paquet en cours de traitement au moment où la requête en retransmission est transmise, et ledit émetteur comporte des moyens de comparaison du numéro de séquence contenu dans une requête en retransmission et du numéro de séquence du paquet à retransmettre lorsque l'indication d'instant de traitement récupérée et l'indication d'instant de traitement du paquet à retransmettre sont identiques, pour autoriser ou pour bloquer la retransmission du paquet à retransmettre.

5. Terminal (30) comportant des moyens de réception (RX3) de paquets contenant notamment une indication d'instant de traitement de paquet (T), des moyens (DEC) de traitement des paquets reçus, et des moyens (TX3) de transmission de requêtes en retransmission relatives à un paquet,
**caractérisé en ce qu'**au moins certaines desdites requêtes en retransmission contiennent une information de récupération (T_{T} ; SN_{T}) permettant de récupérer l'indication d'instant de traitement du paquet en cours de traitement au moment où la requête en retransmission est transmise (T_{T}).

6. Terminal selon la revendication 5, **caractérisé en ce que** ladite information de récupération est constituée par l'indication d'instant de traitement du paquet en cours de traitement au moment où la requête en retransmission est transmise.

7. Terminal selon la revendication 5, **caractérisé en ce que** lesdits paquets contiennent un numéro de séquence, et ladite information de récupération est constituée par le numéro de séquence du paquet en cours de traitement au moment où la requête en retransmission est transmise.

8. Terminal selon la revendication 5, **caractérisé en ce que** lesdits moyens de réception et de transmission sont des moyens radio.

9. Serveur (10) comportant des moyens (TX1) de transmission de paquets contenant notamment une indication d'instant de traitement de paquet (T), et des moyens (RX1) de réception d'une requête en retransmission (RR), relative à un paquet à retransmettre (Q_{L}), émise par un terminal (30) doté de moyens (RX3) de réception de paquets et de moyens (TX3) de traitement des paquets reçus,
**caractérisé en ce qu'**au moins certaines desdites requêtes en retransmission contenant une information de récupération (SN_{T} ; T_{T}) de l'indication d'instant de traitement du paquet en cours de traitement au moment où la requête en retransmission de paquet est transmise (T_{T}), ledit serveur comporte des moyens (E1) de récupération d'une indication d'instant de traitement à partir d'une information de récupération contenue dans une requête en retransmission reçue, et des moyens (E1) de comparaison de l'indication d'instant de traitement récupérée et de l'indication d'instant de traitement du paquet à retransmettre, pour autoriser ou pour bloquer la retransmission du paquet à retransmettre.

10. Serveur selon la revendication 7, **caractérisé en ce que**, lesdits paquets contenant un numéro de séquence, il comporte une mémoire (TBL) de stockage d'informations relatives à au moins certains paquets, notamment les numéros de séquence desdits paquets, et des moyens pour effacer de ladite mémoire les informations relatives à au moins certains des paquets qui ont un numéro de séquence inférieur ou égal à celui d'un paquet à retransmettre, lorsque la retransmission dudit paquet à retransmettre est bloquée.

11. Procédé de retransmission d'un paquet destiné à être mis en oeuvre dans un système de transmission comportant un émetteur (10) destiné à transmettre des paquets contenant notamment une indication d'instant de traitement de paquet, et un récepteur (30) destiné à recevoir des paquets et à traiter des paquets reçus, ledit procédé comportant une étape (S1 ; S1') de transmission d'une requête en retransmission relative audit paquet (RR), et une étape (S2 ; S2') de réception par l'émetteur de ladite requête en retransmission, **caractérisé en ce que** ladite requête en retransmission contient une information (SN_{T}; T_{T}) de récupération de l'indication d'instant de traitement du paquet en cours de traitement au moment où la requête en retransmission de paquet est transmise (T_{T}), et **en ce que** ledit procédé comporte
- une étape (S3 ; S3') de récupération de l'indication d'instant de traitement à partir de l'information de récupération contenue dans la requête en retransmission reçue,
- une étape (S6 ; S6') de comparaison de l'indication d'instant de traitement récupérée et de l'indication d'instant de traitement du paquet à retransmettre, pour autoriser (A1 ; A5 ; A8) ou pour bloquer (A2 ; A4 ; A7) la retransmission du paquet à retransmettre.

12. Programme comportant des instructions pour la mise en oeuvre d'un procédé de retransmission de paquets selon la revendication 11 lorsqu'il est exécuté par un processeur.
